# EUROPEAN PATENT APPLICATION

(11) **EP 4 697 759 A1**
(43) Date of publication of application: **18.02.2026**
(21) Application number: 24788588.2
(22) Date of filing: 29.03.2024
(51) Int. Cl.: H04W 4/021, G08G 1/09, G08G 5/00, H04W 4/44, H04W 24/08, H04W 76/25, H04W 88/14

(54) **COMMUNICATION DEVICE, USER EQUIPMENT (UE), CONTROL METHOD, AND PROGRAM**

(30) Priority: 14.04.2023 JP 2023066429
(71) Applicant: Canon Kabushiki Kaisha, Tokyo, 146-8501 (JP)
(72) Inventor: YAMAMOTO Tetsuya, Tokyo 146-8501 (JP)
(74) Representative: Canon Europe Limited
(86) International application number: PCT/JP2024/012949
(87) International publication number: WO 2024/214560

(57) **Abstract**

A communication apparatus relating to cellular communication detects a transition event in which a communication state between an edge application server and a user equipment (UE) transitions from a communication connected state to a communication failure state. In a case where the transition event has been detected by a detection unit, a predetermined notification is issued to the UE.

## Description

### Technical Field

The present disclosure relates to a communication apparatus, a User Equipment (UE), a control method, and a program.

### Background Art

The 3GPP (registered trademark) standards include a communication service continuity technique called Session and Service Continuity (SSC) as a technique on the core network side. Even when an Internet Protocol (IP) address of an edge application server (EAS) is changed due to, for example, a movement of a terminal, SSC allows the communication destination to be switched appropriately without the terminal (User Equipment (UE)) being aware of this change.

### Citation List

### Patent Literature

PTL 1: Japanese Patent Laid-Open No. 2020-113808

### Summary of Invention

### Technical Problem

Each EAS has a designated service area for maintaining a predetermined service quality. When a terminal (UE) moves outside the service area (out of the coverage) of an EAS relating to real-time video transmission that the terminal is currently utilizing, detection of instantaneous interruption of the service relating to the EAS is delayed. More specifically, there arises such a problem that the use of SSC to maintain service continuity can result in delayed detection of real-time data transmission failures.

The present invention has been made in consideration of at least one of the above-described problems. One aspect of the present invention is directed to providing a mechanism that allows a User Equipment (UE) side to detect that the UE has moved out of a service area of an EAS.

### Solution to Problem

According to an aspect of the present invention, a communication apparatus relating to cellular communication, comprising a detection unit configured to detect a transition event in which a communication state between an edge application server and a user equipment (UE) transitions from a communication connected state to a communication failure state; and a notification unit configured to issue a predetermined notification to the UE in a case where the transition event has been detected by the detection unit.

### Advantageous Effects of Invention

According to the one aspect of the present invention, the mechanism that allows the User Equipment (UE) side to detect that the UE has moved out of the service area of the EAS can be provided.

### Brief Description of Drawings

[Fig. 1] Fig. 1 is a block diagram illustrating a network system and a configuration in a core network.
[Fig. 2] Fig. 2 is a block diagram illustrating a configuration of a UE.
[Fig. 3] Fig. 3 is a sequence diagram on the core network side according to a first embodiment.
[Fig. 4] Fig. 4 illustrates a message content according to the first embodiment.
[Fig. 5] Fig. 5 illustrates an information element according to the first embodiment.
[Fig. 6] Fig. 6 illustrates a software functional block diagram of the UE.
[Fig. 7] Fig. 7 is a sequence diagram on the UE side according to the first embodiment.
[Fig. 8] Fig. 8 is a sequence diagram on the core network side according to a second embodiment.
[Fig. 8A] Fig. 8A is a flowchart illustrating an example of processing according to a modification.
[Fig. 9] Fig. 9 illustrates a table of message types for 5GS session management according to a second embodiment.
[Fig. 10] Fig. 10 illustrates a message content according to the second embodiment.
[Fig. 11] Fig. 11 is a sequence diagram on the UE side according to the second embodiment.
[Fig. 12] Fig. 12 illustrates a table of cause value of cause information element of 5GSM according to a third embodiment.

### Description of Embodiments

In the following description, embodiments will be described in detail with reference to the attached drawings. However, the embodiments that will be described below are not intended to limit the invention defined according to the claims. A plurality of features will be described in the embodiments, but not this plurality of features is entirely necessarily essential to the invention, and the plurality of features may be combined in any manner. Further, the same or similar configurations will be identified by the same reference numerals in the attached drawings, and duplicate descriptions will be omitted.

### [First Embodiment]

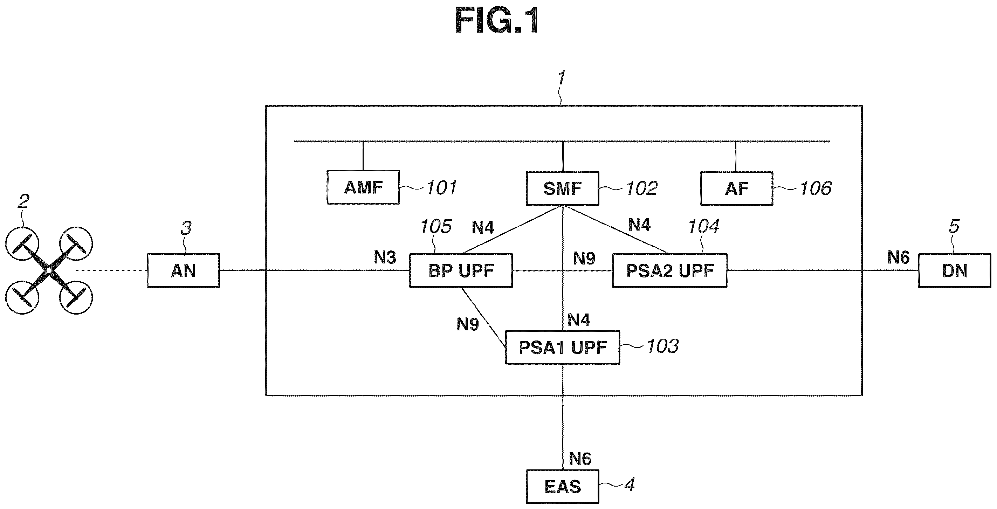

Fig. 1 is a block diagram illustrating an example of an overall network system and a configuration of relevant portions in a core network 1 according to the present embodiment. The core network 1 indicates a core network. A User Equipment (UE) 2 indicates a terminal. An Access Network (AN) 3 indicates an access network including, for example, a base station located between the core network 1 and the UE 2. An EAS 4 indicates an edge application server. A DN 5 indicates a Data Network. The UE exchanges data and a control signal with the core network 1 via the AN using communication in compliance with the 3GPP standards. The core network 1 exchanges data and a control signal with the base station and the UE using communication in compliance with the 3GPP standards. The core network 1 controls the communication in compliance with the 3GPP standards as necessary. Cellular communication, such as communication in compliance with the 5G standards, the 5G Advanced standards, or the 6G standards, is carried out between the UE and the core network 1.

In the present embodiment, the UE 2 is configured as a movable object or a terminal mounted on a movable object. For example, the UE 2 is a terminal mounted on a drone, which is an example of the movable object.

In the core network 1, an Access and Mobility Management Function (AMF) 101 performs processing relating to authentication of a subscriber, security, management of positional information, and the like. A Session Management Function (SMF) 102 manages a session in a virtualized communication path for data. User Plane Functions (UPFs) 103, 104, and 105 each serve to process traffic of user data. Especially, the UPF 103 is a Protocol Data Unit (PDU) Session Anchor (PSA) 1 UPF, which is a PSA for processing traffic of user data between the core network 1 and the EAS 4. PSA is an abbreviation for Protocol Data Unit (PDU) Session Anchor, and corresponds to a termination point of a PDU session connected to a reference point N6. Further, the UPF 104 is a PSA 2 UPF for processing traffic of user data between the core network 1 and a DN 5. Further, the UPF 105 is a Branching Point (BP) UPF, which is a BP located between the PSA 1 and the PSA 2, and the AN 3, and serving to sort data to a predetermined PSA.

In the present embodiment, the SMF 102 corresponds to a detection unit, and the AMF 101 corresponds to a notification unit.

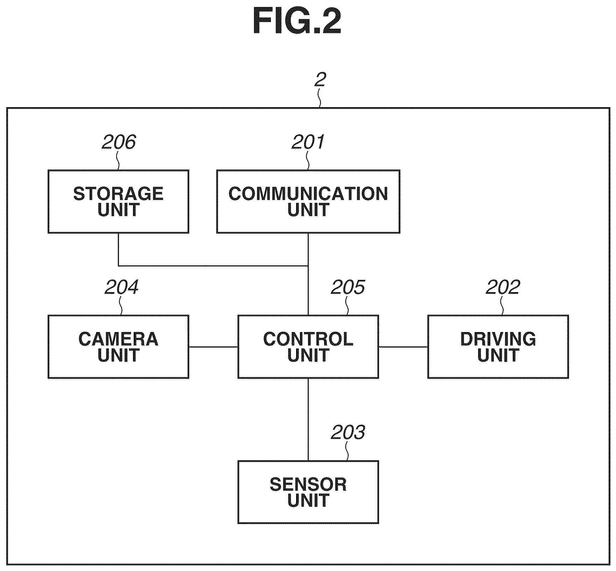

Fig. 2 is a block diagram illustrating an example of the configuration of the UE 2 according to the embodiment. Hereinafter, an apparatus itself refers to the UE 2 or the movable object on which this UE 2 is mounted.

The UE 2 includes a communication unit 201, a driving unit 202, a sensor unit 203, a camera unit 204, a control unit 205, and a storage unit 206.

The communication unit 201 is in charge of communication with the AN. In the present embodiment, the communication unit 201 corresponds to a communication unit.

The driving unit 202 drives a driving source for a movement with respect to the apparatus itself (the UE 2). The driving unit 202 is, for example, a driving unit for moving and stopping. For example, in the case where the UE 2 is an apparatus in the form of a terminal mounted on a drone, the driving unit 202 may include a driving circuit that supplies a driving signal to the driving source (various types of actuators). The various types of actuators may include an electric motor, a solenoid, and the like. Further, the driving unit 202 may include a battery and the like.

The sensor unit 203 is a sensor unit for detecting the position and the orientation of the apparatus itself. The sensor unit 203 may include a sensor that measures the position of the apparatus itself based on a radio wave from a Global Navigation Satellite System (GNSS) satellite, such as a Global Positioning System (GPS) satellite, an acceleration sensor, a gyroscope sensor, and the like.

The camera unit 204 is mounted to be able to image surrounding environments. For example, in a case where the UE 2 is a drone, the camera unit 204 may be mounted via a 3-axis gimbal or the like. Further, a plurality of camera units 204 may be provided.

The control unit 205 controls the entire apparatus by executing a control program stored in the storage unit 206. The control unit 205 includes one or more processors, such as a central processing unit (CPU) and a micro processing unit (MPU), and controls the entire operation of the UE 2 by executing the control program read out into a random access memory (RAM), which is the storage unit 206. Each of processing procedures performed by the control unit 205 illustrated in flowcharts that will be described below can also be realized using various kinds of hardware circuits. The various kinds of hardware circuits include an application specific integrated circuit (ASIC), a field-programmable gate array (FPGA), and the like. Alternatively, the processing illustrated in the flowcharts that will be described below can also be realized by cooperation between the hardware circuit and the processor such as a CPU or an MPU. In the present embodiment, the control unit 205 corresponds to a first detection unit, a second detection unit, a processing unit, and a release unit.

The storage unit 206 stores the control program, which is executed by the control unit 205, and various kinds of information, such as a communication parameter and captured video data. Various kinds of operations that will be described below are performed by the control unit 205 executing the control program stored in the storage unit 206. The storage unit 206 may include a primary storage unit and an auxiliary storage unit. The primary storage unit is, for example, a read only memory (ROM) or a RAM. The primary storage unit may store or temporarily save an operating system (OS), which is basic software to be executed by the control unit 205, a program such as application software, and data. The axillary storage unit is, for example, a hard disk drive (HDD) or a solid state drive (SSD), and may store data relating to application software and the like. For example, the control program stored in a nonvolatile storage area is developed into the RAM, and is executed by the processor constituting the control unit 205. In this manner, the control unit 205 and the storage unit 206 may function as a so-called computer.

The storage unit 206 may include a recording medium storing a predetermined program. The program stored in this recording medium may be installed via a drive device or the like, and the installed predetermined program may be executable by the control unit 205. Various types of recording media can be used as the recording medium. For example, the recording medium may be a recording medium optically, electrically, or magnetically recording information, such as a compact disk (CD)-ROM, a flexible disk, or a magneto-optical disk. Alternatively, the recording medium may be, for example, a semiconductor memory electrically recording information, such as a ROM or a flash memory. The recording medium does not include a carrier wave.

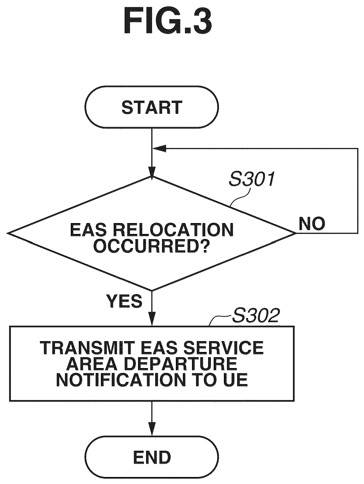

Fig. 3 is a flowchart for transmitting an EAS service area departure notification to the UE 2, which is performed on the core network 1 side according to the present embodiment. The present flowchart will be described using a case in which, initially, data such as a video image transmitted by the UE 2 is processed in the EAS 4, i.e., data such as a video image transmitted by the UE 2 is communicated between the UE 2 and the EAS 4.

First, in step S301, the core network 1 determines whether EAS relocation has occurred. The occurrence of EAS relocation corresponds to an event in which data such as a video image currently captured by the UE 2 stops being processed in the EAS 4 (an example of a transition event).

In a case where a result of the determination in step S301 is NO (NO in step S301), the processing returns to step S301. In other words, the core network 1 is kept in a state waiting for the occurrence of EAS relocation. On the other hand, in a case where a result of the determination in step S301 is YES (YES in step S301), in step S302, the core network 1 transmits the EAS service area departure notification to the UE 2. The EAS service area departure notification is a notification for notifying the UE 2 that the UE 2 has moved to the outside of the EAS service area (hereinafter also referred to as "out of the area of the EAS 4").

In the present embodiment, the EAS service area departure notification may be transmitted to the UE 2 as a Non Access Stratum (NAS) message. In other words, the EAS service area departure notification may be transmitted from the AMF 101 in the core network 1 to the UE 2 via a base station (not illustrated) to which the UE 2 is currently connected in the AN 3. In this case, this NAS message is transmitted from the AMF 101 to the base station (not illustrated) to which the UE 2 is currently connected in the AN 3, and is further transmitted from the base station (not illustrated) to the UE 2.

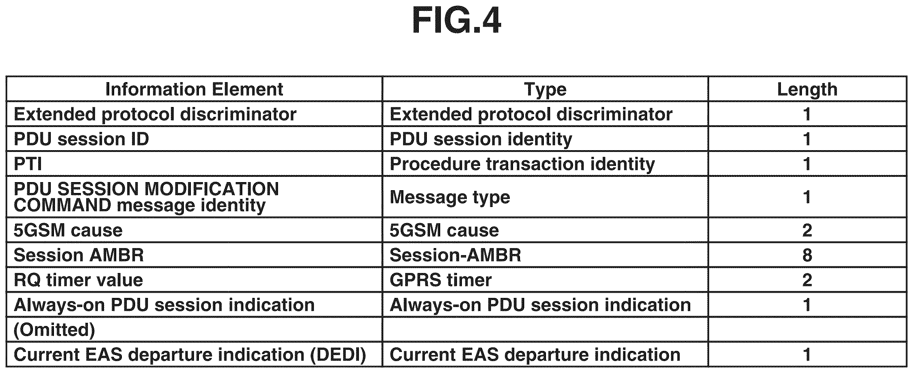

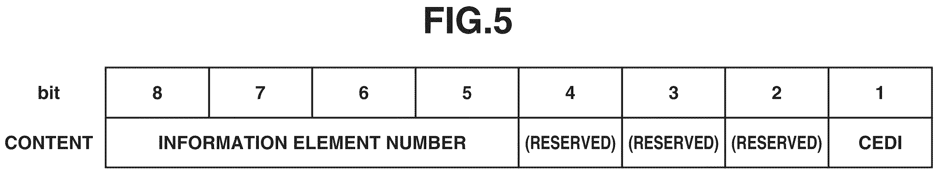

Further, in the present embodiment, the EAS service area departure notification may be issued using a PDU SESSION MODIFICATION COMMAND message. This may be realized by newly providing a Current EAS departure indication (CEDI) field in the content of the message as indicated in the bottom line in Fig. 4. The CEDI field is eight-bit information as illustrated in Fig. 5. Four bits from a bit 8 to a bit 5 are used for an information element number indicating this CEDI. A bit 4 to a bit 2 are reserved areas. For example, when a bit 1 is zero, it indicates that the UE 2 is located within the area of the EAS 4, and when the bit 1 is one, it indicates that the UE 2 is out of the service area of the EAS 4.

In this manner, when the UE 2 has moved out of the area of the EAS 4, the present embodiment allows this departure to be detected earlier than conventional techniques. In other words, the present embodiment allows the UE 2 to detect its departure earlier than conventional techniques based on receiving the EAS service area departure notification. This is effective when the UE 2 has moved out of the area of the EAS 4 despite the fact that the communication can be maintained between the UE 2 and the base station (not illustrated).

Next, the operation on the UE 2 side will be described.

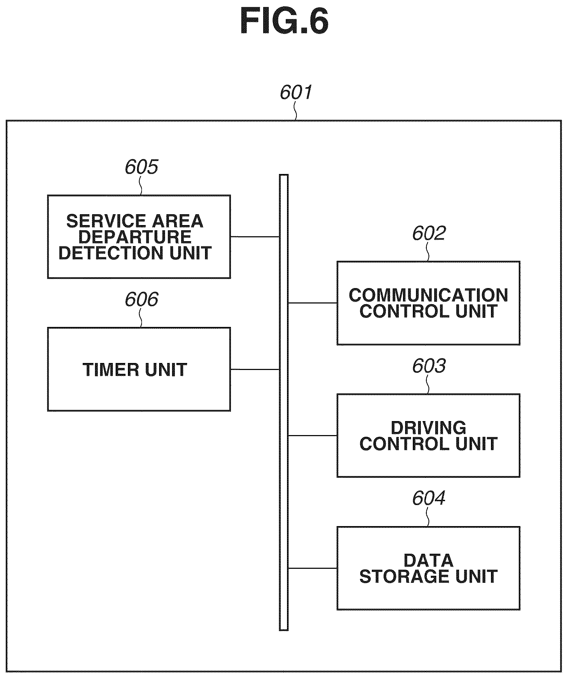

Fig. 6 is a block diagram illustrating an example of the configuration of software functional blocks of the UE 2 according to the present embodiment. Fig. 6 illustrates the overall software functional blocks 601. For example, the control unit 205 illustrated in Fig. 2 reads out a program code and execute it, by which the functions illustrated in Fig. 6 can be realized. Alternatively, the OS running on the computer relating to the UE 2 may partially or entirely perform actual processing based on an instruction of this program code, to realize equivalent functions. OS is an abbreviation for Operating System.

In the example illustrated in Fig. 6, the UE 2 includes a communication control unit 602, a driving control unit 603, a data storage unit 604, a service area departure detection unit 605, and a timer unit 606.

The communication control unit 602 controls communication according to the present embodiment. More specifically, the communication control unit 602 controls the communication unit 201 illustrated in Fig. 2.

The driving control unit 603 controls driving according to the present embodiment. More specifically, the driving control unit 603 controls the driving unit 202 illustrated in Fig. 2.

The data storage unit 604 stores and retains various kinds of software that is executed by the communication control unit 602, the driving control unit 603, the service area departure detection unit 605, and the like, and various kinds of information such as authentication information in the storage unit 206 illustrated in Fig. 2.

The service area departure detection unit 605 detects the EAS service area departure notification. The detection method will be described in detail below.

The timer unit 606 counts elapsed time. A time targeted for the time measurement will be described below.

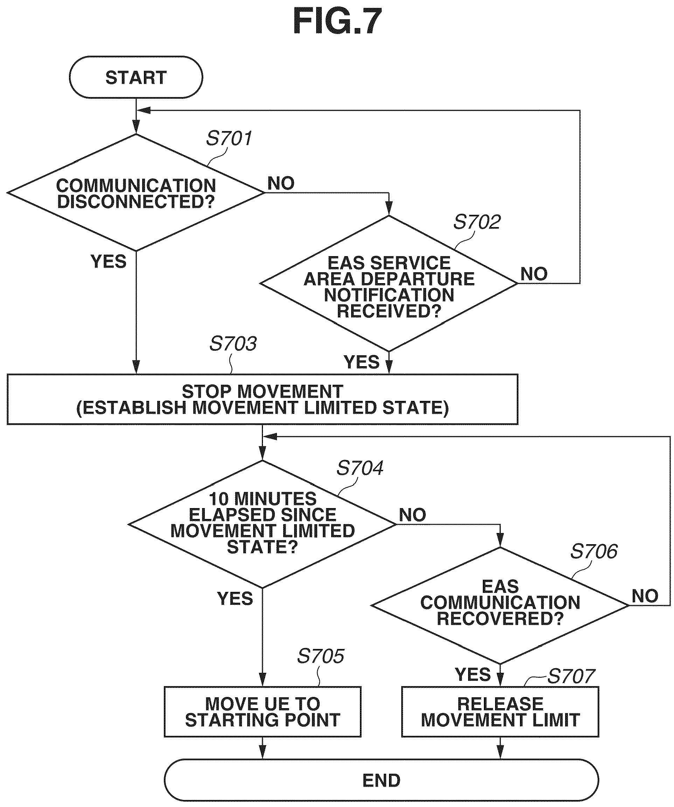

Fig. 7 is a flowchart illustrating an example of processing that may be performed by the UE 2 when the UE 2 receives the EAS service area departure notification according to the present embodiment. The present flowchart may be started by the control unit 205 when the UE 2 is connected to the EAS 4. Alternatively, the present flowchart may be started by the control unit 205 when the UE 2 is connected to the AN 3. The control unit 205 reads out the computer program stored in the storage unit 206 and executes it, by which the processing illustrated in Fig. 7 is performed.

First, in step S701, the UE 2 determines whether the communication with the AN 3 is disconnected. In a case where a result of the determination in step S701 is NO (NO in step S701), in step S702, the UE 2 determines whether the EAS service area departure notification has been received. In a case where a result of the determination in step S701 is YES (YES in step S701), in step S703, the driving control unit 603 stops the movement of the apparatus itself by controlling the driving unit 202 to establish a movement limited state. In a case where the apparatus itself is a drone, the stop of the movement may be realized by hovering of the drone or may be accompanied by landing onto a safe place. Further, in a case of the hovering, the stop of the movement may also be accompanied by a change in the altitude or a movement to a safe place (a position where the apparatus itself does not interfere with another flying drone or the like) (an example of a predetermined place) in consideration of a possibility that the apparatus itself may be blown by the wind or the like.

In a case where a result of the determination in step S702 is NO (NO in step S702), the processing returns to step S701. In a case where a result of the determination in step S702 is YES (YES in step S702), the processing proceeds to step S703. This allows the UE 2 to detect instantaneous disconnection of the EAS service earlier than conventional techniques when the UE 2 has moved out of the EAS service area even when the communication service is maintained due to SSC. As a result, the present embodiment allows the UE 2 to move and stop further safely.

In step S704 subsequent to step S703, determination of whether ten minutes have elapsed since the movement limited state is performed by using the timer unit 606. In other words, determination of whether the movement limited state is maintained for ten or more minutes is performed. The time length of ten minutes is an example, and can be changed as appropriate. In a case where a result of the determination in step S704 is YES (YES in step S704), in step S705, the driving control unit 603 moves the UE 2 to a starting point of this UE 2 by controlling the driving unit 202. In a case where a result of the determination in step S704 is NO (NO in step S704), in step S706, determination of whether the EAS communication is recovered is performed. More specifically, detection of an event in which the communication state between the UE 2 and the EAS 4 is recovered from a communication failure state to a communication connected state (an example of a recovery event) is performed. This recovery event is notified from a server application on the EAS as an event in an application layer as appropriate. In this case, the EAS notifies the UE 2 of it by storing data indicating this recovery event into a data packet of normal downlink communication using the user plane.

In a case where a result of the determination in step S706 is NO (NO in step S706), the processing returns to step S704. On the other hand, in a case where a result of the determination in step S706 is YES (YES in step S706), this means that the communication is recovered between the UE 2 and the EAS 4 regarding data such as a video image captured by the camera unit 204 of the UE 2. Therefore, in this case, in step S707, the UE 2 releases the movement limited state established in step S703.

According to the present embodiment, the movement limited state with respect to the apparatus itself can be established when the communication with the AN 3 is disconnected or the EAS service area departure notification is received. With this configuration, the present embodiment can prevent the apparatus itself from undesirably keeping moving at the time of occurrence of an accident, such as disconnection of the communication or a movement of the UE 2 out of the EAS service area. Further, the movement limited state can be prevented from being maintained for a relatively long time by temporarily returning the UE 2 to the starting point of the UE 2 in a case where the movement limited state is maintained for a relatively long time (for example, ten minutes). On the other hand, the movement limited state can be prevented from being unnecessarily maintained by releasing the movement limited state in a case where the EAS communication is recovered after the movement limited state is established.

In this manner, according to the present embodiment, the UE 2 can be safely controlled even at the time of occurrence of an accident, such as disconnection of communication or a movement of the UE 2 out of the EAS service area.

The movement to the starting point of the UE 2 (an example of the predetermined place) is realized in step S705 in the processing illustrated in Fig. 7, but may be replaced with a movement to another place such as a charging facility (an example of the predetermined place). In this case, the other place may be located in a route connecting the starting point and the current point or may slightly deviate from the route.

Next, the operation on the core network 1 side will be described.

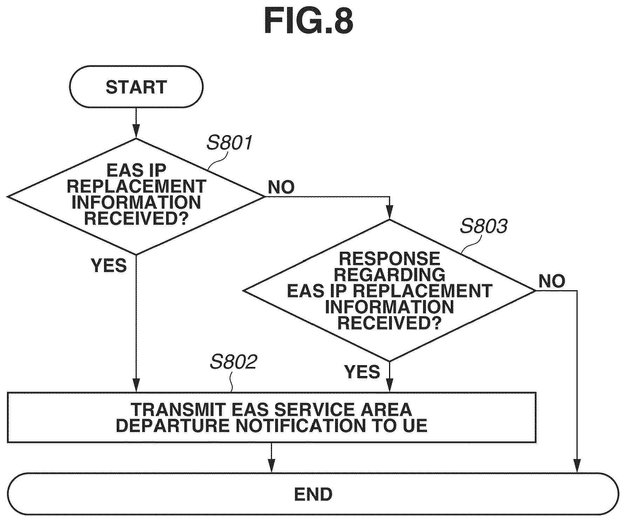

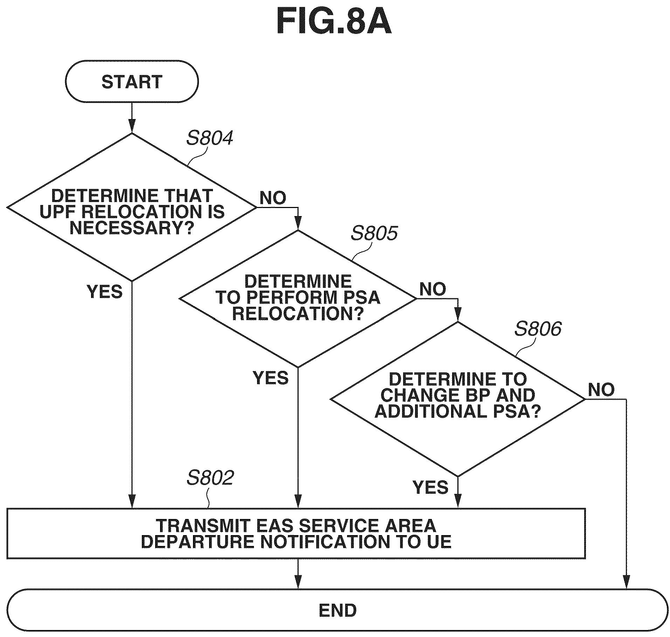

Fig. 8 is a flowchart illustrating an example of processing that is performed by the AMF 101 and the SMF 102 on the core network 1 side according to the present embodiment. The present flowchart illustrates processing for transmitting the EAS service area departure notification to the UE 2. The present flowchart may be performed at a regular interval, such as per 50 milliseconds. The present flowchart will be described using a case in which initially, data transmitted by the UE 2 is communicated between the UE 2 and the EAS 4.

First, in step S801, the SMF 102 detects (checks) reception of EAS IP replacement information, which means replacement of the IP address of the current EAS 4. The EAS IP replacement information is generated, for example, in a case where an Application Function (AF) 106 determines that a load increases on the EAS currently in use and the EAS is desired to be switched to an EAS under a low load.

In a case where a result of the determination in step S801 is YES (YES in step S801), in step S802, the AMF 101 transmits the EAS service area departure notification to the UE 2. In a case where a result of the determination in step S801 is NO (NO in step S801), in step S803, the SMF 102 detects reception of a response regarding EAS IP replacement information. When the movement of the UE 2 is detected by the AMF 101 of the core network 1 and the SMF 102 is notified of the state, the SMF 102 inquires of the AF 106 whether to switch the EAS. Then, in a case where the AF 106 returns an affirmative response to the switching of the EAS to the SMF 102, a message transmitted from the AF 106 to the SMF 102 at this time corresponds to the response regarding the EAS IP replacement information. The EAS IP replacement information in step S802 is different from the EAS IP replacement information in step S801.

In a case where a result of the determination in step S803 is YES (YES in step S803), in step S802, the AMF 101 transmits the EAS service area departure notification to the UE 2. In a case where a result of the determination in step S803 is NO (NO in step S803), the processing is ended without further procedure.

In the present embodiment, the EAS service area departure notification in step S802 may be transmitted to the UE 2 via the base station using the NAS message as described above. Alternatively, the EAS service area departure notification in step S802 may be issued using the PDU SESSION MODIFICATION COMMAND message as described above.

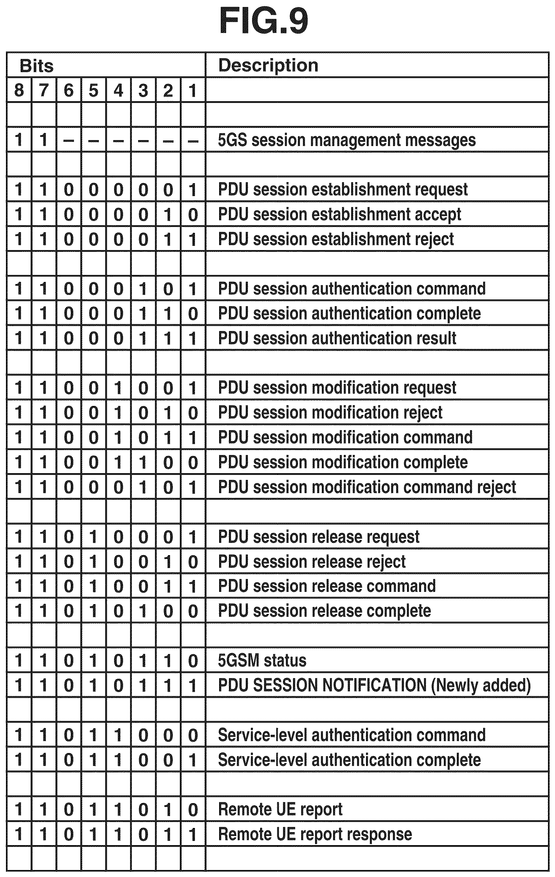

Alternatively, in the present embodiment, the EAS service area departure notification in step S802 may be issued as a PDU SESSION NOTIFICATION COMMAND message. This may be realized by newly adding a field relating to PDU SESSION NOTIFICATION in a table of message types for 5GS session management as illustrated in Fig. 9.

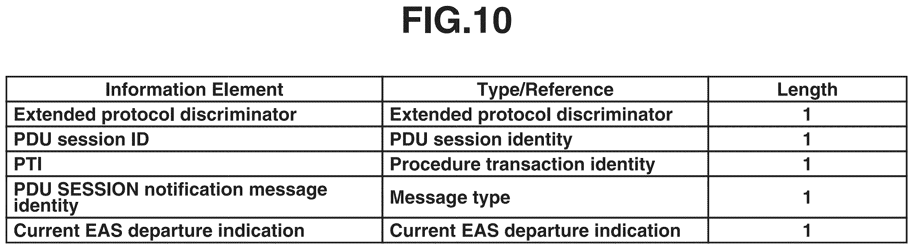

Alternatively, the EAS service area departure notification in step S802 may be realized by newly defining a content of a PDU session notification message as illustrated in Fig. 10. Alternatively, the EAS service area departure notification in step S802 may be realized by newly providing a CEDI (Current EAS departure indication) field as indicated in the bottom line in Fig. 10 in the content of this message. This CEDI field is similar to the field described with reference to Fig. 5 according to the first embodiment, and the description thereof will be omitted here.

In the example illustrated in Fig. 8, when one of the two conditions of steps S801 and S803 is satisfied, a transition event from the communication connected state to the communication failure state is detected with respect to the communication state between the UE 2 and the EAS 4. However, in a modification, either step S801 or S803 may be omitted. Further, the two conditions of steps S801 and S803 can be determined in any order, and may be determined in an order different from Fig. 8.

Fig. 8A is a flowchart of an example of processing according to a modification that may be performed instead of Fig. 8. The present flowchart illustrates processing for transmitting the EAS service area departure notification to the UE 2. Similarly to Fig. 8, initially, data transmitted by the UE 2 is communicated between the UE 2 and the EAS 4.

First, in step S804, the SMF 102 determines whether UPF relocation, meaning relocation of the User Plane Function, is necessary.

In a case where a result of the determination in step S804 is YES (YES in step S804), in step S802, the AMF 101 transmits the EAS service area departure notification to the UE 2. In a case where a result of the determination in step S804 is NO (NO in step S804), in step S805, the SMF 102 determines whether PSA relocation, meaning the relocation of the PSA, is to be performed. In a case where a result of the determination in step S805 is YES (YES in step S805), in step S802, the AMF 101 transmits the EAS service area departure notification to the UE 2. In a case where a result of the determination in step S805 is NO (NO in step S805), in step S806, the SMF 102 determines whether a Branching Point (BP) and an additional PSA are to be changed. The BP may be referred to as Uplink Classifier (UL CL)/BP. The additional PSA is a PSA that is provided additionally to the PSA for realizing edge computing. The BP is a UPF for realizing edge computing, and has a function of sorting upward traffic transmitted from the UE to the PSA or the additional PSA based on a destination IP address.

In a case where a result of the determination in step S806 is YES (YES in step S806), in step S802, the AMF 101 transmits the EAS service area departure notification to the UE 2. In a case where a result of the determination in step S806 is NO (NO in step S806), the processing is ended without further procedure.

In the example illustrated in Fig. 8A, in a case where one of the three conditions of steps S804 to S806 is satisfied, the transition event from the communication connected state to the communication failure state is detected with respect to the communication state between the UE 2 and the EAS 4. However, in a modification, any of the three conditions of steps S804 to S806 may be omitted. Further, the three conditions of steps S804 to S806 can be determined in any order, and may be determined in an order different from Fig. 8A. Further, the processing illustrated in Fig. 8A may be performed after the processing illustrated in Fig. 8. For example, the processing may proceed to step S804 illustrated in Fig. 8A in a case where a result of the determination in step S803 illustrated in Fig. 8 is NO (NO in step S803).

Next, other embodiments that may be realized instead of the above-described first embodiment will be described. The following other embodiments may be described, indicating an embodiment that can be similar to the above-described first embodiment by the same reference numeral and omitting the description thereof. Further, the following other embodiments will be described, indicating an operation portion similar to the first embodiment by the same reference numeral and omitting the description thereof.

### [Second Embodiment]

In a second embodiment, the network system, the UE 2, and the software functional blocks of the UE 2 may be configured as illustrated in Figs. 1, 2, and 6, respectively, similarly to the first embodiment.

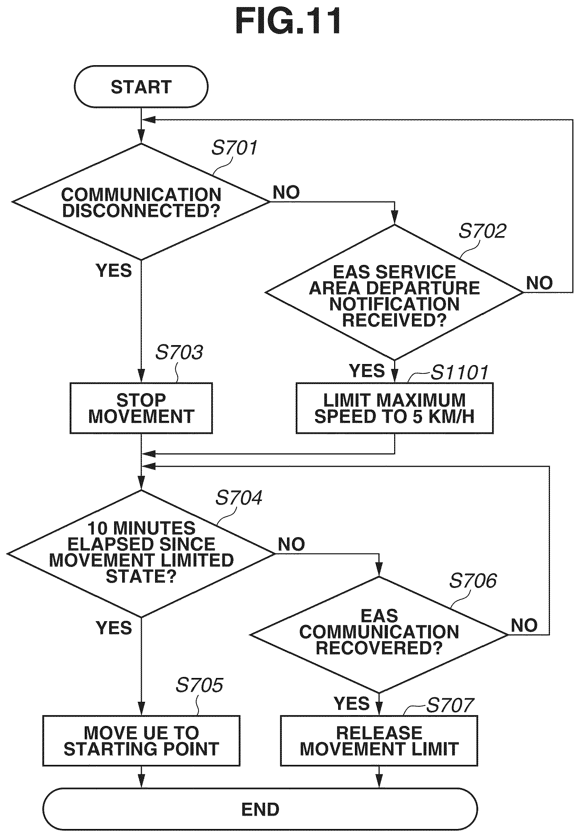

The core network 1 side according to the present embodiment may operate (function) similarly to the above-described first embodiment, and the present embodiment will be described below mainly focusing on the operation (the function) on the UE 2 side according to the present embodiment. Fig. 11 is a flowchart illustrating an example of processing that may be performed by the UE 2 when the UE 2 receives the EAS service area departure notification according to the present embodiment.

In step S702, the UE 2 determines whether the EAS service area departure notification has been received. In a case where a result of the determination in step S702 is NO (NO in step S702), the processing returns to step S701. In a case where a result of the determination in step S702 is YES (YES in step S702), the driving control unit 603 establishes the movement limited state by controlling the driving unit 202. In the present embodiment, in step S1101, the driving control unit 603 limits the maximum speed of the apparatus itself to 5 km/h as the movement limited state. The speed of 5 km/h is merely an example, and a different upper speed limit may be used. This allows the UE 2 to be safely controlled when the UE 2 has moved out of the EAS service area.

Step S704 subsequent to step S1101, and steps after that are similar to the first embodiment illustrated in Fig. 7, and the descriptions thereof will be omitted here.

The present embodiment also allows the UE 2 to be safely controlled even at the time of occurrence of an accident, such as disconnection of the communication or a movement out of the EAS service area, similarly to the above-described first embodiment.

The present embodiment establishes the movement limited state by limiting the maximum speed of the apparatus itself to 5 km/h, and this is a difference from the first embodiment illustrated in Fig. 7, which establishes the movement limited state by stopping the apparatus itself. According to the present embodiment, the movement of the apparatus itself is still permitted even after the movement limited state is established. Therefore, according to the present embodiment, the UE 2 can reach an intended destination earlier when the processing proceeds to step S707, which makes the present embodiment advantageous over the above-described first embodiment. Therefore, the present embodiment is effective when EAS communication is highly likely to be recovered after the movement limited state is established.

The present embodiment can also be combined with the above-described first embodiment. For example, when a relatively short time (for example, within 5 minutes) has elapsed after the movement limited state is established, the movement limited state may be established by limiting the maximum speed of the apparatus itself to 5 km/h. Then, the movement of the apparatus itself may be stopped when a relatively long time (for example, over 5 minutes) has elapsed after the movement limited state is established. From a similar perspective, how much the movement speed is limited may be changed according to the elapsed time in such a manner that the upper speed limit gradually reduces toward zero according to an increase in the elapsed time after the movement limited state is established.

### [Third Embodiment]

In a third embodiment, the network and the UE 2, the operation flowcharts of the core network 1 side and the UE 2 side, and the software functional blocks of the UE 2 may be configured similarly to the above-described first embodiment. In other words, the descriptions about Figs. 1, 2, 3, 6, and 7 may also apply to the third embodiment.

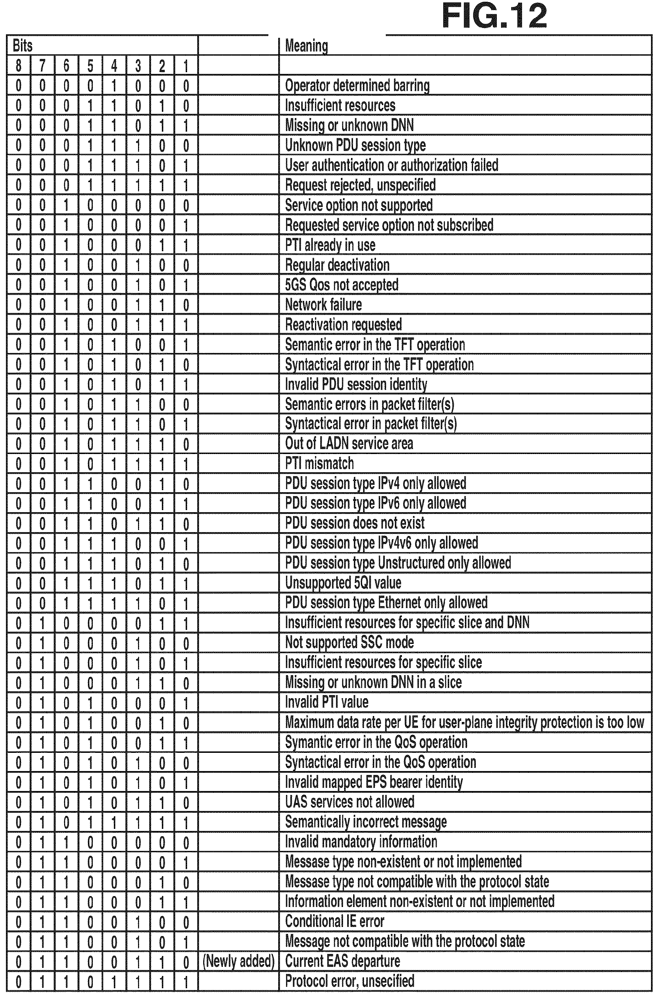

The present embodiment is different from the above-described first and second embodiments in terms of the method for transmitting the EAS service area departure notification in step S802 with respect to Figs. 8 and 8A. More specifically, in the present embodiment, the EAS service area departure notification in step S802 is realized by adding new information to the cause information element of the 5G Session Management (SM) STATUS MESSAGE. More specifically, the 5GSM STATUS message has been conventionally used only when a 5GSM request is rejected, but the present embodiment makes this message usable even for a reason other than the rejection. In this case, the cause value of the 5GSM cause information element may be changed. For example, eight bits indicating Current EAS departure may be newly added as indicated in the second line from the bottom in Fig. 12.

According to the present embodiment, the EAS service area departure notification can be transmitted to the UE 2 using the 5GSM STATUS message. With this configuration, in a case where the UE2 has moved out of the EAS service area, the present embodiment allows the UE 2 to detect that earlier than conventional techniques, similarly to the above-described embodiments.

Having described each embodiment in detail, the present disclosure is not limited to specific embodiments and can be modified and changed in various manners within the range recited in the claims. Further, all or a plurality of the components of the above-described embodiments can also be combined.

For example, the above-described embodiments is appropriate when the UE 2 is a terminal mounted on a drone, but the UE 2 can be mounted on a movable object that is not a drone. The movable object on which the UE 2 is mounted may be a balloon, a satellite, or the like, or may be various kinds of vehicles for running on the ground.

Further, the movement limited state of the UE 2 is established based on the UE 2 receiving the EAS service area departure notification in the above-described embodiments, but a state or an operation different from the movement limited state may be performed. For example, the UE 2 may perform nothing special even when receiving the EAS service area departure notification in some cases (i.e., may be configured to just receive the notification).

Finally, the following additional notes are disclosed with respect to the above-described embodiments.

### [Supplementary Note 1]

A communication apparatus relating to cellular communication, comprising:
a detection unit configured to detect a transition event in which a communication state between an edge application server and a user equipment (UE) transitions from a communication connected state to a communication failure state; and
a notification unit configured to issue a predetermined notification to the UE in a case where the transition event has been detected by the detection unit.

### [Supplementary Note 2]

A control method for controlling communication in compliance with 3rd Generation Partnership Project (3GPP) (registered trademark), the control method comprising:
a detecting step for detecting a transition event in which a communication state between an edge application server and a User Equipment (UE) transitions from a communication connected state to a communication failure state; and
an issuing step for issuing a predetermined notification to the UE in a case where the transition event is detected by the detecting step.

### [Supplementary Note 3]

The control method according to Supplementary Note 2, wherein the predetermined notification includes a notification for causing the UE configured as a movable object or mounted on the movable object to perform a predetermined operation.

### [Supplementary Note 4]

The control method according to Supplementary Note 2 or 3, wherein the predetermined operation includes at least any one of a stop of a movement of the UE, a reduction in a movement speed, or a movement to a predetermined place.

### [Supplementary Note 5]

The control method according to any one of Supplementary Notes 2 to 4, wherein the predetermined notification is issued using Non Access Stratum (NAS).

### [Supplementary Note 6]

The control method according to any one of Supplementary Notes 2 to 5, wherein, in the issuing step, the predetermined notification is issued based on a PDU session manegement procedure.

### [Supplementary Note 7]

The control method according to any one of Supplementary Notes 2 to 6, wherein the predetermined notification is issued using an information element in a PDU session modification message.

### [Supplementary Note 8]

The control method according to any one of Supplementary Notes 2 to 7, wherein the predetermined notification is issued using a PDU session message.

### [Supplementary Note 9]

The control method according to any one of Supplementary Notes 2 to 8, wherein the predetermined notification is issued using a 5GSM cause information element in a 5GSM STATUS message.

### [Supplementary Note 10]

The control method according to any one of Supplementary Notes 2 to 9, wherein the detecting step includes detecting the transition event based on information from an Application Function (AF).

### [Supplementary Note 11]

The control method according to any one of Supplementary Notes 2 to 10, wherein the detecting step includes detecting the transition event in a case where EAS IP replacement information has been received from the AF or a response regarding EAS IP replacement information has been received from the AF.

### [Supplementary Note 12]

The control method according to any one of Supplementary Notes 2 to 11, wherein the detecting step includes detecting the transition event in a case where at least any one of User Plane Function (UPF) relocation, PDU Session Anchor (PSA) relocation, or a change in a Branching Point (BP) and an additional PSA is performed.

### [Supplementary Note 13]

A User Equipment (UE), comprising:
a communication unit configured to communicate with an edge application server;
a first detection unit configured to detect a transition event in which a communication state between the edge application server and the UE transitions from a communication connected state to a communication failure state, based on a notification from a core network in compliance with 3GPP (registered trademark); and
a processing unit configured to perform a predetermined operation in a case where the transition event is detected by the first detection unit.

### [Supplementary Note 14]

The UE according to Supplementary Note 13,
wherein the UE is a UE that is a movable object including a power source or a UE mounted in a movable object including a power source, and
wherein the predetermined operation includes at least one of a stop of a movement of the movable object, a reduction in a movement speed, or a movement to a predetermined place.

### [Supplementary Note 15]

The UE according to Supplementary Note 13 or 14, further comprising:
a second detection unit configured to detect an event of recovery to the communicable state after detection of the transition event by the first detection unit; and
a release unit configured to release an execution state of the predetermined operation in a case where the recovery event has been detected by the second detection unit.

### [Supplementary Note 16]

A program for causing a computer to execute:
a detecting step for detecting a transition event in which a communication state between an edge application server and a User Equipment (UE) transitions from a communication connected state to a communication failure state; and
an issuing step for issuing a predetermined notification to the UE in a case where the transition event has been detected.

### [Supplementary Note 17]

A computer executable method for controlling a User Equipment (UE), the method comprising:
a detecting step for detecting a transition event in which a communication state between an edge application server and the UE transitions from a communication connected state to a communication failure state, based on a notification from a core network in compliance with 3GPP (registered trademark); and
a controlling step for controlling to perform a predetermined operation in a case where the transition event has been detected.

### [Supplementary Note 18]

A program for causing a computer of a User Equipment (UE) to execute:
a detecting step for detecting a transition event in which a communication state between an edge application server and the UE transitions from a communication connected state to a communication failure state, based on a notification from a core network apparatus in compliance with 3GPP (registered trademark); and
a controlling step for controlling to perform a predetermined operation in a case where the transition event has been detected.

The present invention is not limited to the above-described embodiments, and various modifications and alterations may be made without departing from the spirit and scope of the invention. Accordingly, the following claims are appended in order to publicly disclose the scope of the invention.

This application claims the benefit of Japanese Patent Application No. 2023-066429, filed April 14, 2023, which is hereby incorporated by reference herein in its entirety.

### Explanation of Reference Numerals

1 core network (an example of communication apparatus)
2 User Equipment (UE) (an example of user apparatus)
3 Access Network (AN)
4 edge application server
5 Data Network (DN)
101 Access and Mobility Management Function (AMF)
102 Session Management Function (SMF)

## Claims

1. A communication apparatus relating to cellular communication, comprising:
a detection unit configured to detect a transition event in which a communication state between an edge application server and a user equipment (UE) transitions from a communication connected state to a communication failure state; and
a notification unit configured to issue a predetermined notification to the UE in a case where the transition event has been detected by the detection unit.

2. A control method for controlling communication in compliance with 3rd Generation Partnership Project (3GPP) (registered trademark), the control method comprising:
a detecting step for detecting a transition event in which a communication state between an edge application server and a User Equipment (UE) transitions from a communication connected state to a communication failure state; and
an issuing step for issuing a predetermined notification to the UE in a case where the transition event is detected by the detecting step.

3. The control method according to claim 2, wherein the predetermined notification includes a notification for causing the UE configured as a movable object or mounted on the movable object to perform a predetermined operation.

4. The control method according to claim 3, wherein the predetermined operation includes at least any one of a stop of a movement of the UE, a reduction in a movement speed, or a movement to a predetermined place.

5. The control method according to claim 2, wherein the predetermined notification is issued using Non Access Stratum (NAS).

6. The control method according to claim 2, wherein, in the issuing step, the predetermined notification is issued based on a PDU session manegement procedure.

7. The control method according to claim 6, wherein the predetermined notification is issued using an information element in a PDU session modification message.

8. The control method according to claim 6, wherein the predetermined notification is issued using a PDU session message.

9. The control method according to claim 2, wherein the predetermined notification is issued using a 5GSM cause information element in a 5GSM STATUS message.

10. The control method according to any one of claims 2 to 9, wherein the detecting step includes detecting the transition event based on information from an Application Function (AF).

11. The control method according to claim 10, wherein the detecting step includes detecting the transition event in a case where EAS IP replacement information has been received from the AF or a response regarding EAS IP replacement information has been received from the AF.

12. The control method according to any one of claims 2 to 9, wherein the detecting step includes detecting the transition event in a case where at least any one of User Plane Function (UPF) relocation, PDU Session Anchor (PSA) relocation, or a change in a Branching Point (BP) and an additional PSA is performed.

13. A User Equipment (UE), comprising:
a communication unit configured to communicate with an edge application server;
a first detection unit configured to detect a transition event in which a communication state between the edge application server and the UE transitions from a communication connected state to a communication failure state, based on a notification from a core network in compliance with 3GPP (registered trademark); and
a processing unit configured to perform a predetermined operation in a case where the transition event is detected by the first detection unit.

14. The UE according to claim 13,
wherein the UE is a UE that is a movable object including a power source or a UE mounted in a movable object including a power source, and
wherein the predetermined operation includes at least one of a stop of a movement of the movable object, a reduction in a movement speed, or a movement to a predetermined place.

15. The UE according to claim 13 or 14, further comprising:
a second detection unit configured to detect an event of recovery to the communicable state after detection of the transition event by the first detection unit; and
a release unit configured to release an execution state of the predetermined operation in a case where the recovery event has been detected by the second detection unit.

16. A program for causing a computer to execute:
a detecting step for detecting a transition event in which a communication state between an edge application server and a User Equipment (UE) transitions from a communication connected state to a communication failure state; and
an issuing step for issuing a predetermined notification to the UE in a case where the transition event has been detected.

17. A computer executable method for controlling a User Equipment (UE), the method comprising:
a detecting step for detecting a transition event in which a communication state between an edge application server and the UE transitions from a communication connected state to a communication failure state, based on a notification from a core network in compliance with 3GPP (registered trademark); and
a controlling step for controlling to perform a predetermined operation in a case where the transition event has been detected.

18. A program for causing a computer of a User Equipment (UE) to execute:
a detecting step for detecting a transition event in which a communication state between an edge application server and the UE transitions from a communication connected state to a communication failure state, based on a notification from a core network apparatus in compliance with 3GPP (registered trademark); and
a controlling step for controlling to perform a predetermined operation in a case where the transition event has been detected.
